# EUROPEAN PATENT APPLICATION

(11) **EP 0 927 869 A1**
(43) Date of publication of application: **07.07.1999**
(21) Application number: 98830802.9
(22) Date of filing: 30.12.1998
(51) Int. Cl.: G01B 7/16, G01L 5/10

(54) **Device and method for the measurement of big strains in products under thermal and/or mechanical stresses.**

(30) Priority: 31.12.1997 IT RM970820
(71) Applicant: CENTRO SVILUPPO MATERIALI S.p.A., 00129 Roma (IT)
(72) Inventor: D'Anna, Riccardo, Centro Sviluppo Materiali SpA, 00129 Rome (IT); Demofonti, Giuseppe, Centro Sviluppo Materiali Spa, 00129 Rome (IT); Mannucci, Gianluca, Centro Sviluppo Materiali SpA, 00129 Rome (IT)
(74) Representative: Tonon, Gilberto

(57) **Abstract**

A device and a method are described for the measurement of heavy strains of products subject to thermal and/or mechanical stresses, characterised in that it comprises a rope-shaped member of metallic material and a measurement device of the resistance and/or the voltage connected to the ends of said rope-shaped member, the arrangement being such that said rope-shaped member is apt to be arranged in an electrically insulated and sliding manner onto the surface of the product subject to strains to provide to the reading device an electric signal corresponding to the strain of said product.

## Description

The present invention relates to a device and a method for the measurement of big strains in products under thermal and/or mechanical stresses.

The field of the industrial application for the subject of the present invention is that pertaining the measurement systems of big strains (i.e., about 20%) as those that are obtained during the operation/qualification/characterisation of large-sized structures/components (i.e., pipes, plates, etc.).

For instance, in the field of production/use of steel pipes for the piping of energetic fluids it is important to understand the pipe behaviour in presence of overpressures with respect to the operation pressure; it is therefore important to know the global straining capacity of the pipe with respect to the pressure increase up to the breaking thereof.

For this particular field of application the present invention constitutes an useful device for the measurement of the global strain of a pipe under pressure.

In the field of the industrial or research measurement of big strains in materials, different systems are known, such as resistance gages, position transducers, laser systems.

Such resistance gages are commonly adopted for the measurement of small and localised strains (usually below 5%) and therefore the same are not suitable for the measuring of big strains and/or strains globally concerning structures of a size larger than that of the strain gage itself (usually in the order of the cm at the most). To allow the measurement of big strains, various strain gages are utilised and placed in several sites of the structure in order to cover the whole dimension.

This allows the reliable measurement of big strains in cases where the strain itself took place homogeneously along the structure and without overstepping the end scale value of an individual strain gage; otherwise, in case of big local strains there follows the unavoidable detachment and/or breaking of the individual strain gage and, as a consequence, the measurement does not results as corresponding to the value of the global strain actually sustained by the structure.

As to the position transducers (potentiometric, with a differential transformer, etc.), the same are adopted for the measurement of displacements on determined bases, and therefore have to be utilised coupled to a stretcher, both to increase the measurement base up to the desired size, when the latter is particularly large, and in the case of measurement bases that are not straight, i.e. as the section of a pipe.

Moreover, usually these position transducers are not utilised to measure the final breaking strain of the tested structure, as they are usually expensive and this would entail their destruction. Therefore, their use is usually limited to the measurement of strains falling within the range of the base measurement of the transducer itself, given the high engineering cost required for the set-up of the transducer/stretcher system to extend the measurement base or to adapt it to the case of bases that are not straightforward.

As to the laser systems, they are utilised for the measurement of displacements by sighting the opportunely highlighted ends of the tested structure.

These systems allow very accurate measurements, but are usually suitable only for measurements over straightforward bases and in opportunely monitored environments, as they are based on the propagation of the laser beam; from this point of view they do not turn out to be particularly suitable for measurements that have to be carried out in industrial environments or in real operative conditions of the tested structure.

Therefore, with such devices and methods there are several needs which subsist still unanswered, as the difficulty of measurement of big strains over long bases with reliability, reproducibility of the results, and ease of carrying out at reasonable prices.

Further, the present invention is especially indicated particularly in the cases wherein the structure or the component to be measured is large-sized, and therefore not of easily handling in a measurement lab, or it is located in environments that are not easily accessible as the industrial ones or those of the real operating conditions of the structure/component under examination (i.e., in the case of underground pipelines).

The object of the present invention is that of providing a device and a method for the measurement of big strains on long bases.

To achieve the object an alloy wire is utilised, capable to be deformed rationally (that is in an evenly distributed way along each section of the wire), being such strain greater than the strain that may be reached up to the collapse by the tested structure. This metal alloy is comprised in the group which comprises the manganine, the constantane, the alumel.

In particular, the subject of the present invention is a device for the measurement of big strains in products under thermal and/or mechanical stresses, characterised in that it comprises:
- a rope-shaped member of metallic material apt to elongate with a steady cross section decrease, the member being optionally sheathed with an insulating and/or self-lubricating material; and
- a strain reading device electrically connected to the ends of said rope-shaped member, the arrangement being such that said rope-shaped member is apt to be placed onto the surface of said product in an electrically insulated and sliding manner, and then to provide to the reading device an electric signal which corresponds to the strain of said product.

Further, the present invention provides a method of measurement of strains in products under thermal and/or mechanical stresses, characterised in that it comprises the following steps:
- arranging a rope-shaped member of metallic material, optionally sheathed, over at least a portion of the outside surface of the product to be measured, in such a way that the ends of said rope-shaped member are electrically insulated and fixed to said product;
- electrically connecting a reading device to said ends of the rope-shaped member in an electrically insulated manner from the product; and
- detecting with said reading device an electric signal which corresponds to the strain of the rope-shaped member, and therefore to the strain sustained by the underlying product.

A detailed description of a preferred embodiment of the present invention will be disclosed hereinafter, given by way of explanation and not for limitative purposes, making reference to the annexed drawings, wherein:
figure 1 is a diagram showing the variation of electric resistance and the strain ratio according to the device of the present invention;
figures 2a and 2b are two diagrams showing measurements according to different resistance gages during measurements of strains in pipes;
figure 3 is a diagram showing the measurement of strains in pipes under stress utilising potentiometric position transducers opportunely modified with stretchers; and
figure 4 is a diagram showing the measurement of strains in pipes under stress utilising the device according to the present invention.

The present invention consists of the development of a device and a method for the measurement of big deformations, for instance in the order of 20%, on long bases, the latter ranging from a few centimetres to some metres long.

The measurement is made possible with the utilisation of a rope-shaped element (hereinafter referred to as wire) made of a metal alloy capable of elongate homogeneously for an amount of up to approximately 20% of the initial length thereof.

The operating principle of the same consists in the variation of the electrical resistance of a wire depending on the plastic strain sustained thereof.

The method consists of the measurement of the change of the resistance and/or voltage of the wire which has its ends fixedly connected to the structure whereof the strain is to be measured.

To this end the wire utilised is made of a metallic alloy capable to be deformed in a rational way, that is in an evenly distributed way along each section of the wire, up to an amount approximately equal to 20% of the initial length, and when compared to the maximum bearable strain of the tested structure, to an higher extent thereof. Such metal alloy is comprised in the group comprising the manganine, the constantane, the alumel.

To detect the change of resistance sustained by the wire during the test, may be utilised for example an ohmmeter, or a Wheatstone bridge, or a direct measurement of the current and the voltage applied to the wire.

Prior to its utilisation, it is necessary to derive the ratio which relates the strain sustained by the wire to the resistance value, by measuring the change of resistance of the wire as a function of known strains imposed thereof.

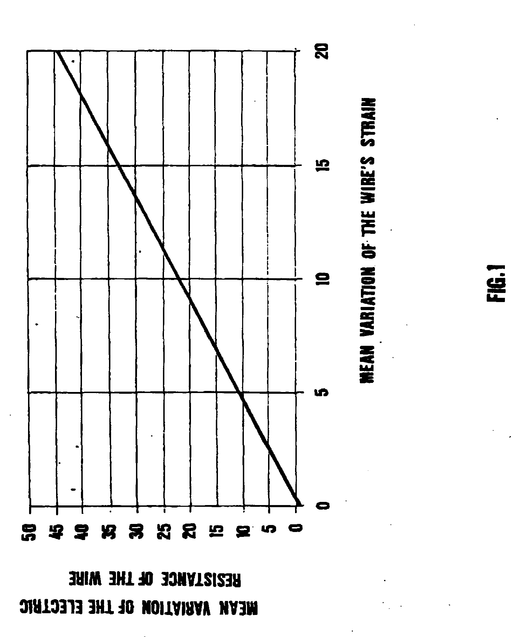

Thus, and as shown in figure 1, during the measurement carried out onto the structure, it will be possible to associate to the change of resistance detected the corresponding value of the strain sustained by the tested structure.

The wire, when fixed at its ends on the base to be measured, has to be let free to slide onto the base's surface so as to avoid non-homogeneous strains thereof, which would invalidate the results of the measurement.

An example will be disclosed hereinafter, with reference to the annexed figures, wherein a measurement strains in a pipe was carried out with the device of the present invention and with the strain gage and position transducer devices of the known art, thus making apparent the advantages of the device according to the present.

### EXAMPLE

In this example the device and the method of the present invention were utilised to measure the total circumferential strain of a steel pipe section subjected to an increasing internal pressure up to its burst.

To this end, a silk sheathed manganine wire (0.226 mm of diameter) was utilised, whereof the stretching/resistance ratio, which resulted of a linear type, was obtained beforehand. (See figure 1).

Then, the wire was positioned over the entire circumference of the pipe surface, opportunely insulated to avoid electrical contact thereof. Between pipe and wire a Teflon tape was interposed to allow the wire sliding along the pipe surface.

After having covered the entire circumference of the pipe, the wire ends were fixedly connected to the pipe surface prior to an appropriate electrical insulation (headers).

Such ends were then connected to a measurement device of the electrical resistance. In this case, the method utilised was the one normally utilised for strain gage measurements, based on the utilisation of the Wheatstone bridge.

Moreover, three different pipe sections (A, B and C) were measured to measure the trend of the total circumferential strain in each of them when increasing the pressure.

The test consisted in pumping water into a steel pipe of X52 grading, having a 323.8 mm diameter and an 8 mm thickness, properly based, until bringing it to burst.

During the test, thanks to the measurement system of the invention, it was possible to measure the change of resistance of the wire. On the basis of the stretching/resistance ratio predetermined for the utilised wire (as reported in figure 1), it was possible to obtain the trend of the total circumferential strain of the sections under examination during the entire course of the test up to the breaking of the pipe.

Furthermore, with the aim of comparing the different measurement systems that can be adopted for the measurement of the strain in the case under examination, within the same test the total circumferential strain of the pipe was also measured, utilising resistance strain gages placed along the circumference of two (A and C) out of the three pipe sections under examination, as well as position transducers of potentiometric type set correspondingly to such A, B and C sections on appropriate trolleys (stretchers), each thereof integral to a metallic strip that covered the entire circumference of the pipe.

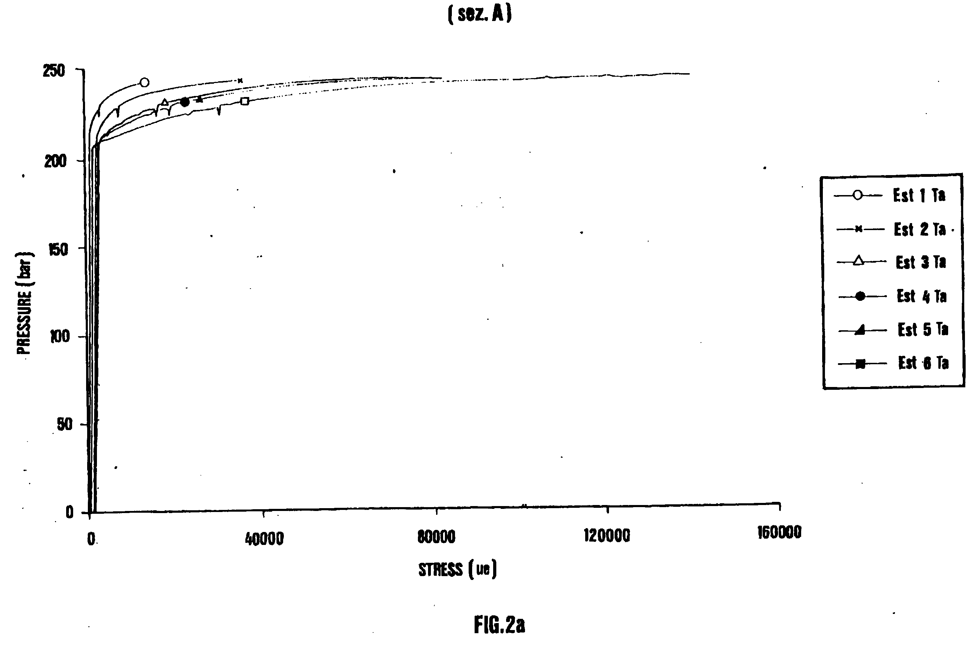

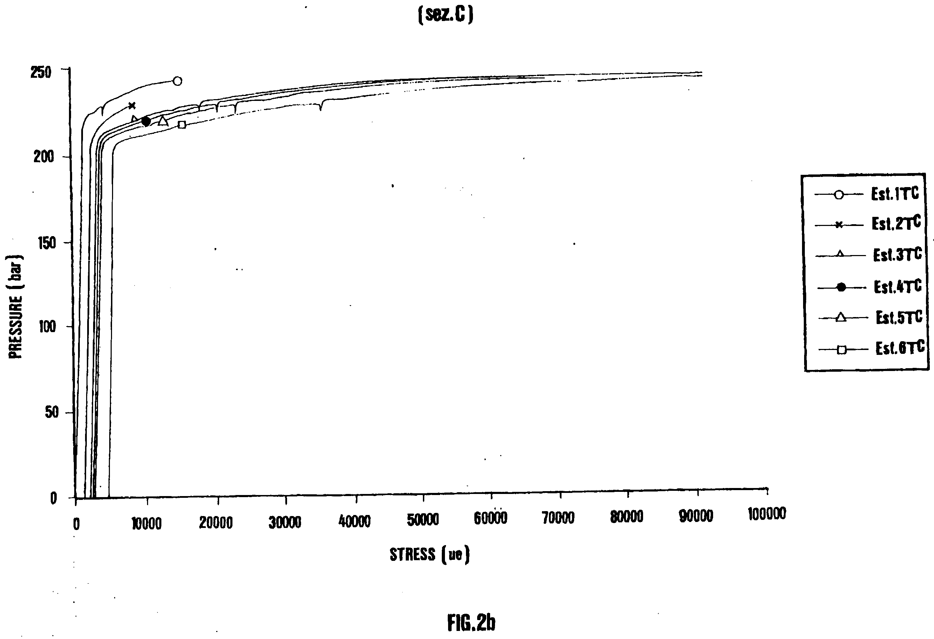

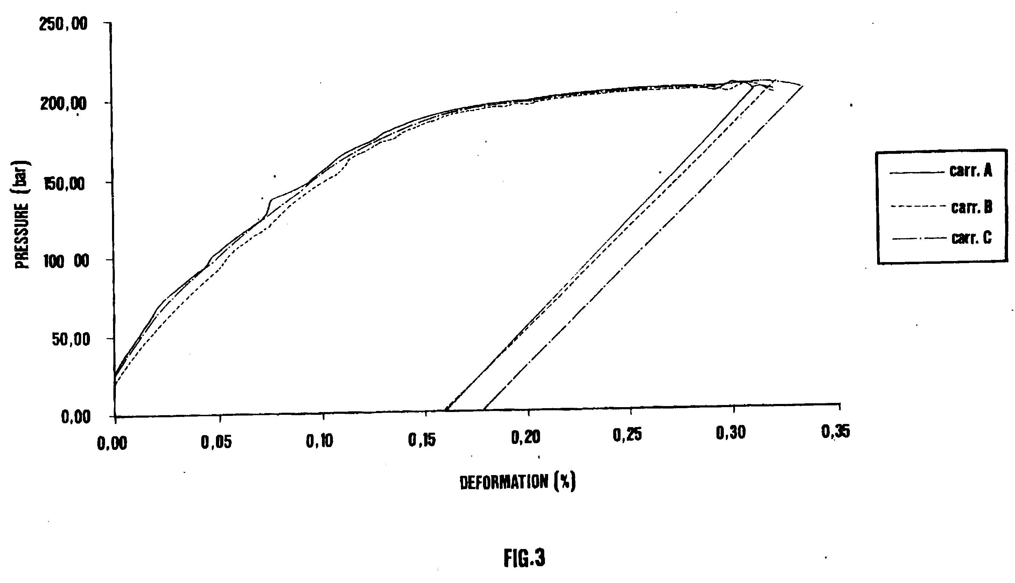

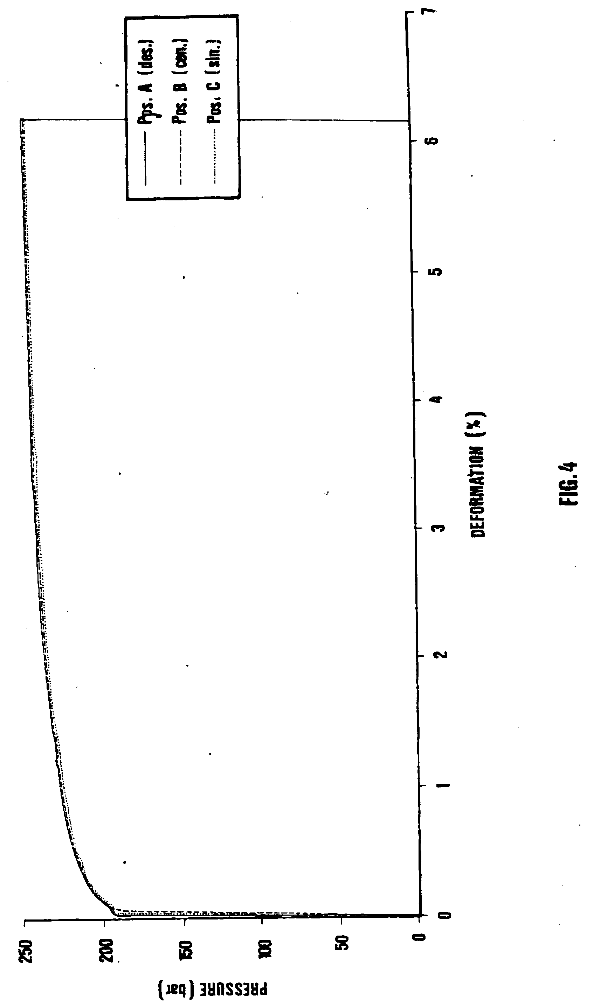

The results of such measurements are reported in figures 2a and 2b for the strain gages measurements, wherein 100000 ue equal to a 10% distortion, and in figure 3 for the position transducers set onto trolleys, respectively. The results of the measurements carried out with the present invention are shown in figure 4.

From the analysis of the results shown in the figures it is apparent that only with the utilisation of the present invention the trend of the strain sustained by the pipe under pressure from the start could be measured up to the burst, which took place for strain values of over 6%.

In the case of the measurement carried out with the strain gages, the burst of some of them took place before the end of the test, thereby making it impossible to obtain the trend of the circumferential strain of the pipe of above 0.2%.

On the other hand, in the case of position transducers set onto trolleys, the strain was measured up to a maximum value of 0.3%, and thereafter the test was stopped in order to allow the removal of these devices aimed at preventing their destruction at the instant of the pipe burst.

To the men skilled in the art it will be apparent that the present invention is susceptible of several further modifications and variants without their departing from the spirit of the invention and from the scope of the annexed claims.

## Claims

1. A device for the measurement of big strains in products under thermal and/or mechanical stresses, characterised in that it comprises:
- a rope-shaped member of metallic material apt to elongate with a steady cross section decrease, the member being optionally sheathed with an insulating and/or self-lubricating material; and
- a strain reading device electrically connected to the ends of said rope-shaped member, the arrangement being such that said rope-shaped member is apt to be placed onto the surface of said product in an electrically insulated and sliding manner, and then to provide to the reading device an electric signal which corresponds to the strain of said product.

2. The device according to claim 1, wherein the metallic material of said rope-shaped member is selected from the group comprising:
- manganine;
- constantane;
- alumel.

3. The device according to claim 1 or 2, wherein the reading device is set to provide a strain signal which corresponds to the change of resistance, and/or the voltage, and/or the current between the ends of said rope-shaped member.

4. The device according to the preceding claims, wherein said rope-shaped member is apt to elongate with a steady cross sectional decrease, up to 20% of its initial length.

5. Use of the device according to the preceding claims for the measurement of the strains in products under thermal and/or mechanical stresses, such as pipes.

6. Method of measurement of strains in products under thermal and/or mechanical stresses, characterised in that it comprises the following steps:
- arranging a rope-shaped member of metallic material, optionally sheathed, over at least a portion of the outside surface of the product to be measured, in such a way that the ends of said rope-shaped member are electrically insulated and fixed to said product;
- electrically connecting a reading device to said ends of the rope-shaped member in an electrically insulated manner from the product; and
- detecting with said reading device an electric signal which corresponds to the strain of the rope-shaped member, and therefore to the strain sustained by the underlying product.

7. The method according to claim 6, further comprising the step of laying down a self-lubricating material onto the surface of the product subject to strains prior to the arrangement of the rope-shaped member.

8. The method according to claim 6 or 7, wherein said self-lubricating material is apt to make the rope-shaped member slidable onto the surface of the product to be measured and to electrically insulate the former from the latter.

9. The method according to the preceding claim, wherein said self-lubricating material is Teflon.

10. Device and method substantially as previously described, illustrated and claimed with reference to the annexed drawings.
